# EUROPÄISCHE PATENTSCHRIFT

(11) **EP 2 744 864 B1**
(45) Veröffentlichungstag und Bekanntmachung des Hinweises auf die Patenterteilung: **26.01.2022**
(21) Anmeldenummer: 12743902.4
(22) Anmeldetag: 04.08.2012
(51) Int. Cl.: C09D 11/00

(54) **DRUCKFARBENSYSTEME**
PRINTING INK SYSTEMS
SYSTÈME D'ENCRE D'IMPRIMERIE

(30) Priorität: 20.08.2011 DE 102011111145
(43) Veröffentlichungstag der Anmeldung: 25.06.2014
(73) Patentinhaber: Clariant International Ltd, 4132 Muttenz (CH)
(72) Erfinder: BACH, Sebastijan, 86462 Achsheim (DE); HOHNER, Gerd, 86152 Augsburg (DE); HERRLICH, Timo, 86444 Affing (DE); FELL, Rainer, 86368 Gersthofen (DE); TRUE, Daniela, 86179 Augsburg (DE)
(74) Vertreter: Kuba, Stefan
(86) Internationale Anmeldenummer: PCT/EP2012/003347
(87) Internationale Veröffentlichungsnummer: WO 2013/026530

(56) Entgegenhaltungen:
- WO-A1-2010/059562
- WO-A2-2006/060784
- US-A- 3 389 100
- US-A- 5 618 338
- US-A1- 2002 016 440

## Beschreibung

Die Erfindung betrifft glycosidische Polymere und gleichzeitig Kohlenwasserstoff- und/oder Amidwachse und/oder biobasierende Wachse enthaltende Druckfarbensysteme sowie die Verwendung von Polyglykosid-/Wachskombinationen in Druckfarben zur Verbesserung des Absetz- und Redispergierverhaltens und einer signifikanten Verbesserung der Scheuerfestigkeit.

Druckfarbensysteme sind in der Regel aus den Hauptkomponenten Farbmittel, Bindemittel und Lösemittel zusammengesetzt. Sie enthalten darüber hinaus Additive zur Einstellung der gewünschten Gebrauchseigenschaften. So werden üblicherweise Polyolefinwachse zugesetzt, um den bedruckten Oberflächen Scheuer- und Kratzfestigkeit zu verleihen (vgl. z. B. Fette Seifen Anstrichmittel 69, Nr. 8, Seite 589 (1967); dto. 73, Nr. 4, Seite 231 (1971)). Ein wirksamer Scheuerschutz ist insbesondere bei solchen Druckerzeugnissen von Bedeutung, die mechanischen Beanspruchungen ausgesetzt sind, sei es in der Druckmaschine, bei der Stapelung, beim Transport oder beim Gebrauch. Dies gilt vor allem für Verpackungsmaterialien.

Der Einsatz von glykosidischen Polymeren und Derivaten, insbesondere Polysacchariden als Zusatzstoff in Druckfarben ist bereits beschrieben worden.

In DE-10201344 werden Polysaccharide, im Speziellen Polyglucosen und Polygalactomannosen als Verdickungsmittel für wässrige Druckfarben beschrieben. Die eingesetzten wasserlöslichen Polysaccharide dienen somit als Rheologiehilfsmittel.

In US-3010833 wird durch Additivierung einer ölbasierenden Druckfarbe mit einem wässrigen Celluloseether sowie einer wässrigen Stärkezubereitung eine Verminderung des unerwünschten offsettings erreicht, worunter das Abfärben der frisch verdruckten Farbe auf das darüber liegende Blatt verstanden wird. Die starke Separationsneigung der unterschiedlich polaren Systeme wird durch teiloxidiertes Öl (Emulgator) als weitere Komponente in Verbindung mit starkem Rühren unterdrückt.

Gemäß US-3389100 wird Kornstärke in ölbasierten Druckfarben als Additiv zur Antirutschausrüstung von bedruckten Kartons beschrieben. Ein Zusatz von mikrokristallinem Paraffinwachs dient gleichzeitig zur Erhöhung des Scheuerschutzes. Das Kornstärke/Wachs-Verhältnis beträgt in der beanspruchten Mischung (0,5 - 2,5 %) / (5 - 7 %).

In der Anmeldung JP-2004292746 werden abriebfeste wässrige Druckfarben beansprucht, deren Komponenten aus 70 - 90 Gew.-% Schellack und 10 - 30 Gew.-% veresterter Stärke bestehen.

Das Dokument US-5618338 beschreibt eine flüssige Zusammensetzung umfassend kationische Verbindungen in Kombination mit fein gemahlener Zellulose zur Reduzierung des "Ausblutens" einer Druckfarbe auf Papiersubstraten. Es werden allerdings keine Wachse eingesetzt. Die beschriebenen Tinten weisen eine gute Druckqualität und Fixerbarkeit auf dem Papiersubstrat auf.

In WO-2010059562 werden Druckfarben beschrieben, die sauer oder enzymatisch hydrolisierte oder aber chemisch modifizierte Stärke enthalten, mit deren Hilfe eine verbesserte Dispergierung der Pigmente erreicht wird.

Die Anmeldung US-2002016440 beschreibt redispergierbare oder lösliche Rezepturen für Antistatik-Coatings, umfassend Latex-, Polyanion- und polymere Thiophenkomponenten. Die Dispersionen können chemisch modifizierte Polysaccharide als Verdickungsmittel enthalten.

In WO-2006060784 werden wässrige Druckfarben beschrieben, die neben Farbmittel hochmolekulare Polysaccharide, wie z. B. Stärke auch Dextrine, Maltodextrine sowie ein wasserlösliches Acrylatpolymer als Emulgator enthalten. Die hochmolekulare Stärke verbessert unter anderem die Recyclierfähigkeit ("repulpability") des bedruckten cellulosehaltigen Substrats.

Die Anmeldung WO-2007056660 beschreibt eine Flexo- und/oder Tiefdruckfarbe, zur Verwendung auf Vliessubstraten, die aus Polyurethanharz, Lösungsmittel, Farbmittel und Nitrocelluloseharz bestehen, wobei es sich bei der Nitrocellulose um ein chemisch modifiziertes Polysaccharid handelt.

Das Dokument US-4310356 offenbart wässrige Zeitungsdruckfarben mit einem Gehalt an 3 - 60 Gew.-% "dispergierter Stärke". Da Stärke in Wasser ein stark ausgeprägtes Absetzverhalten zeigt, werden ferner oligomere Saccharide, sogenannte Dextrine und/oder acetylierte Dextrine und/oder hydrolysierte Polysaccharide eingesetzt. Derartige Rezeptierungen zeigen beim Drucken ein insgesamt verbessertes Trocknungsverhalten und verbessertes Erscheinungsbild.

Die Verwendung von glykosidischen Polymeren in Druckfarbenrezepturen ist somit vorbeschrieben. Nachteilig ist hier jedoch die Tatsache, dass die Polysaccharidkomponente in der flüssigen Druckfarbe zum raschen Absetzen neigt. Dies gilt in besonderem Maße für Druckfarbensysteme mit niedriger Viskosität, wie sie in der Regel z. B. bei Hochdruckfarben vorliegt. Die beim Lagern der Farbe eintretende Entmischung erschwert die Handhabung. Der nach kurzer Zeit sich bildende, vor allem aus Polysaccharid, wie z. B. Stärke bestehende Bodensatz ist überaus kompakt und lässt sich nur schwer wieder redispergieren.

Weiterhin kommt es beim Einsatz polysaccharidhaltiger Farben während des Druckvorgangs in verstärktem Ausmaß zu "Aufbau"-Erscheinungen auf den farbübertragenden Walzen, wobei letztere sich zunehmend mit Polysaccharidpartikeln belegen, die schließlich den Farbtransfer und das Druckbild inakzeptabel beeinträchtigen.

Den vorteilhaften Eigenschaften der Polysaccharide als Additivkomponente in Druckfarben stehen somit einige gravierende Nachteile gegenüber, und es besteht daher Bedarf, diesen Nachteilen abzuhelfen.

Wie überraschend gefunden wurde, gelingt dies dadurch, dass man Polysaccharide, wie z. B. Stärke oder Mikrocellulose mit einer bestimmten spezifischen Oberfläche und Korngrößenverteilung einsetzt und diese in der Druckfarbenrezeptur mit einem Polyethylen- und/oder Fischer-Tropsch-Wachs und/oder Amidwachs und/oder Naturwachs kombiniert. Die Kombination mit Wachs sorgt unvorhergesehenerweise für eine zusätzliche Stabilisierung der Formulierung.

Darüber hinaus konnte mit dieser Kombination überraschend eine signifikante Verbesserung der Scheuerfestigkeit erzielt werden, wie sie durch die einzelnen Komponenten bisher so nicht erreicht werden konnte.

Gegenstand der Erfindung ist daher ein Druckfarbensystem, enthaltend nicht-modifizierte glykosidische Polymere (d.h. nicht-modifizierte Polyglycoside) sowie Polyolefin- und/oder Fischer-Tropsch-Wachse und/oder Amidwachse und/oder biobasierte Wachse, welche in mikronisierter Form mit einem d99-Wert von maximal 100 µm, bevorzugt maximal 30 µm, besonders bevorzugt maximal 20 µm eingesetzt werden, sowie gegebenenfalls Pigmente, Bindemittel und/oder Lösemittel, wobei das glycosidische Polymer eine spezifische Oberfläche nach BET von minimal 0,45 m²/g und eine

Partikelgrößenverteilung mit einer Ungleichförmigkeitszahl (D60/D10) bis maximal 3,5 aufweist.

Weiterer Erfindungsgegenstand ist die Verwendung des erfindungsgemäßen Druckfarbensystems zur Verbesserung des Absetz- und Redispergierverhaltens und der Scheuerfestigkeit von Druckfarbensystemen, dadurch gekennzeichnet, dass diesen Polyolefin- und/oder Fischer-Tropsch-Wachse und/oder Amidwachse und/oder biobasierte Wachse sowie Polyglykoside, die eine spezifische Oberfläche von ≥ 0,45 m²/g und eine Ungleichförmigkeitszahl ≤ 3,5 besitzen, zugegeben werden. Die Druckfarbensysteme können ferner Pigmente, Bindemittel oder Lösungsmittel enthalten.

Als Pigmente, Bindemittel und Lösemittel kommen prinzipiell alle geeignete Materialien in Betracht, wie sie beispielsweise in Ullmann's Encyclopedia of Industrial Chemistry, 5. Auflage, Vol. A 22, Kap. Printing Inks, Seite 143 ff, Weinheim 1993 oder in der Vorläuferedition Ullmanns Encyklopädie der technischen Chemie, 4. Auflage, Vol. 10, Kap. Druckfarben, Seite 187 ff beschrieben sind.

Unter glykosidischen Polymeren werden in der vorliegenden Erfindung Polymere und Polymerderivate verstanden, deren sich wiederholende Monomereinheiten über glykosidische Verbindungen verknüpft sind. Darunter fallen insbesondere Polysaccharide wie z. B. Stärke, Dextrine, Maltodextrine, Pektine, Callose, Cellulose, Celluloseester und -ether sowie Chitine. Derartige Polysaccharide sind beschrieben z. B. in Ullmann's Encyclopedia of Industrial Chemistry, 5. Auflage, Vol. A 25, Weinheim 1993, Kap. Starch and other Polysaccharides, Seite 1 sowie in Ullmann's Encyclopedia of Industrial Chemistry, 5. Auflage, Vol. A 5, Weinheim 1986, Kap. Cellulose, Seite 375 ff.

Wegen ihrer sehr guten Verfügbarkeit sind natürlich vorkommende Polysaccharidvarianten wie z. B. Cellulose sowie verschiedene Stärken für die vorliegende Erfindung von besonderer Bedeutung.

Cellulose ist die in der Natur häufigste organische Verbindung und damit auch das häufigste Polysaccharid. Sie stellt mit etwa 50 Gew.-% den Hauptbestandteil von Pflanzenzellwänden dar. Cellulose ist ein Polymer bestehend aus dem Monomer Glucose, welches über β-1,4-glykosidische Verbindungen verknüpft ist und aus zwischen mehreren hundert bis zehntausend Wiederholeinheiten besteht. Die Glucosemoleküle sind in der Cellulose jeweils um 180° zueinander verdreht. Dadurch erhält das Polymer, anders als z. B. das Glucose-Polymer Stärke, eine lineare Form. Mikrocellulose (Cellulosewhisker) mit einer vergrößerten spezifischen Oberfläche kann z. B. durch Herauslösen der weniger kristallinen Anteile mit Hilfe von konzentrierten Säuren erfolgen. Erfindungsgemäß eignet sich daher Mikrocellulose in Kombination mit Wachsen wegen ihrer vergrößerten spezifischen Oberfläche besonders gut für die Verwendung in Druckfarben. Neben der nativen Cellulose sind auch zahlreiche chemische Modifizierungen mit thermoplastischen Eigenschaften bekannt. Dazu gehören u. a. Methylcellulose, Celluloseacetat und Cellulosenitrat.

Stärken sind makromolekulare, aus Glucoseeinheiten aufgebaute Naturstoffe und stellen eine weitere wichtige Stoffgruppe innerhalb der Polysaccharide dar. Stärke kommt in Pflanzen als Bestandteil von Samenkörnern, Wurzeln, Knollen, Früchten und Mark vor und dient bei Bedarf zum metabolischen Aufbau von Gerüstsubstanzen oder zur Energiegewinnung. Morphologisch besteht Stärke aus mikroskopisch kleinen Körnern, die eine für ihre Herkunft jeweils spezifische Gestalt aufweisen. Stärke ist hinsichtlich ihres chemischen Aufbaus nicht homogen zusammengesetzt, sondern enthält als Hauptbestandteile die beiden strukturell unterschiedlichen Polysaccharide Amylose und Amylopektin. In ersterer sind die Glucosemoleküle linear über α-1,4-glykosidische Brücken miteinander verknüpft, letzteres weist eine verzweigte Struktur mit α-1,4- und α-1,6-Verknüpfungen auf. Darüber hinaus enthält native Stärke Nebenbestandteile, z. B. Fettsäuren und Fette sowie eiweißartige Komponenten, Lipoproteine, mineralische Bestandteile und in nennenswerten Anteilen auch Wasser. Als erfindungsgemäß verwendbare Stärkearten kommen z. B. Getreidestärken wie Maisstärke, Weizenstärke, Reisstärke, Sorghum- bzw. Hirsestärke in Frage, daneben Knollen- und Wurzelstärken wie Kartoffelstärke, Tapioka- und Arrowrootstärke. Bevorzugt sind Getreidestärken, besonders bevorzugt sind Reis- und Maisstärke.

Die Größe von Stärkekörnern variiert je nach Herkunft in einem weiten Bereich und liegt zwischen 2 und 150 µm. Dabei bildet Reis die kleinsten Körner aus (2 - 10 µm), Maisstärkekörner haben in der Regel einen Durchmesser zwischen 10 und 25 µm, die Partikel von Kartoffelstärke liegen zwischen 20 und 150 µm.

Neben unmodifizierter kann auch chemisch degradierte Stärke eingesetzt werden, wie sie etwa durch Hydrolyse, Oxidation, Hitze- oder Enzymbehandlung von Stärkerohmaterial zugänglich ist, ebenso z. B. durch Veresterung, Veretherung oder sonstiger auf chemischem Weg derivatisierte Stärke.

Geeignet im Sinne der Erfindung sind Partikel mit einem d99-Wert von ≤ 20 µm, bevorzugt bei ≤ 18 µm. Der d99-Wert gibt die in dem Partikelgemisch maximal vorhandene Teilchengröße an. Entsprechende Stärkepulver können gegebenenfalls auch aus gröberem Stärkegut durch Fraktionieren, z. B. Sichten oder Sieben oder durch Mikronisierung gewonnen werden. Die Partikelgröße korreliert dabei mit der spezifischen Oberfläche der Partikel wie folgt: Je kleiner die Partikel sind desto größer ist die spezifische Oberfläche. Die Angabe der spezifischen Oberfläche der Partikel als Maßzahl für die Partikelgröße anstelle von z. B. d50 oder d90-Werten hat den Vorteil, dass sie die gesamte Partikelgrößenverteilung impliziert und zudem sensitiv für feinere Partikel ist. Dies lässt sich damit erklären, dass die Partikeloberfläche in erster Näherung proportional zum Quadrat des Partikeldurchmessers ist, während die Masse der Partikel in erster Näherung proportional zum Kubik der Partikeldurchmesser ist. Dagegen hat die Messung von Partikelgrößen über Laserbeugung allgemein den Nachteil, dass durch das volumengewichtete Messprinzip größere Partikel, insbesondere Agglomerate, bei der Bestimmung von d50-, d90-Werten etc. besonders stark gewichtet werden und somit feine Partikel in der Verteilungsfunktion untergehen. Somit ist die spezifische Oberfläche eine besonders geeignete Maßzahl um die Erfindung genauer zu beschreiben. Erfindungsgemäß eignen sich Partikel mit einer spezifischen Oberfläche von mindestens 0,45 m²/g, bevorzugt von mindestens 0,6 m²/g, besonders bevorzugt von 1,0 m²/g.

Erfindungsgemäß eignen sich Polyglykoside mit Ungleichförmigkeitszahlen kleiner 5,0, bevorzugt von kleiner 4,0, besonders bevorzugt kleiner 3,0.

Die glykosidische Polymerkomponente wird, bezogen auf das Druckfarbensystem, in einer Menge von 0,1 bis 12 Gew.-%, bevorzugt von 0,1 bis 6 Gew.-%, besonders bevorzugt von 0,2 bis 2 Gew.-% eingesetzt.

Als Wachskomponente sind synthetische Kohlenwasserstoffwachse geeignet, z. B. Polyolefinwachse. Diese können durch thermischen Abbau verzweigter oder unverzweigter Polyolefin-Kunststoffe oder durch direkte Polymerisation von Olefinen hergestellt werden. Als Polymerisationsverfahren kommen beispielsweise radikalische Verfahren in Frage, wobei die Olefine, in der Regel Ethylen, bei hohen Drucken und Temperaturen zu mehr oder minder verzweigten Polymerketten umgesetzt werden; daneben kommen Verfahren in Betracht, bei denen Ethylen und/oder höhere 1-Olefine wie z. B. Propylen, 1-Buten, 1-Hexen etc. mit Hilfe metallorganischer Katalysatoren, beispielsweise Ziegler-Natta oder Metallocenkatalysatoren, zu unverzweigten oder verzweigten Wachsen polymerisiert werden. Entsprechende Methoden zur Herstellung von Olefin-Homo- und Copolymerwachsen sind beispielsweise in Ullmann's Encyclopedia of Industrial Chemistry, 5. Auflage, Vol. A 28, Weinheim 1996 in Kapitel 6.1.1./6.1.2. (Hochdruckpolymerisation, (Wachse), Kapitel 6.1.2. (Ziegler-Natta-Polymerisation, Polymerisation mit Metallocenkatalysatoren) sowie Kapitel 6.1.4. (thermischer Abbau) beschrieben.

Weiterhin können sogenannte Fischer-Tropsch-Wachse eingesetzt werden. Diese werden katalytisch aus Synthesegas hergestellt und unterscheiden sich von Polyethylenwachsen durch niedrigere mittlere Molmassen, engere Molmassenverteilungen und niedrigere Schmelzviskositäten.

Die eingesetzten Kohlenwasserstoffwachse können unfunktionalisiert oder durch polare Gruppen funktionalisiert sein. Der Einbau solcher polarer Funktionen kann nachträglich durch entsprechende Modifizierung der unpolaren Wachse erfolgen, z. B. durch Oxidation mit Luft oder durch Aufpfropfung polarer Olefinmonomere, beispielsweise α,β-ungesättigter Carbonsäuren und/oder deren Derivaten, etwa Acrylsäure oder Maleinsäureanhydrid. Ferner können polare Wachse durch Copolymerisation von Ethylen mit polaren Comonomeren, beispielsweise Vinylacetat oder Acrylsäure hergestellt werden; weiterhin durch oxidativen Abbau von höhermolekularen, nicht wachsartigen Ethylen-Homo- und Copolymeren. Entsprechende Beispiele finden sich etwa in Ullmann's Encyclopedia of Industrial Chemistry, 5. Auflage, Vol. A 28, Weinheim 1996, Kapitel 6.1.5.

Geeignete polare Wachse sind außerdem Amidwachse, wie sie z. B. durch Umsetzung von längerkettigen Carbonsäuren, z. B. Fettsäuren, mit ein- oder mehrwertigen Aminen zugänglich sind. Hierfür typischerweise verwendete Fettsäuren weisen Kettenlängen im Bereich zwischen 12 und 24, bevorzugt zwischen 16 und 22 C-Atomen auf und können gesättigt oder ungesättigt sein. Bevorzugt eingesetzte Fettsäuren sind die C₁₆- und C₁₈-Säuren, insbesondere Palmitinsäure und Stearinsäure oder Gemische aus beiden Säuren. Als Amine kommen neben Ammoniak insbesondere mehrwertige, z. B. zweiwertige organische Amine in Frage, wobei Ethylendiamin bevorzugt ist. Besonders bevorzugt ist die Verwendung von unter der Bezeichnung EBS-Wachs (Ethylenbisstearoyldiamid) handelsüblichem, aus technischer Stearinsäure und Ethylendiamin hergestelltem Wachs.

Weiterhin können biobasierte Wachse eingesetzt werden, bei denen es sich in der Regel um polare Esterwachse handelt. Im Allgemeinen werden unter biobasierten Wachsen jene Wachse verstanden, die auf einer nachwachsenden Rohstoffbasis aufbauen. Hierbei kann es sich sowohl um native als auch um chemisch modifizierte Esterwachse handeln. Typische native biobasierende Wachse sind beispielsweise in Ullmann's Encyclopedia of Industrial Chemistry, 5. Auflage, Vol. A28, Weinheim 1996 in Kapitel 2. (Wachse) beschrieben. Dazu gehören beispielsweise Palmenwachse wie Carnaubawachs, Gräserwachse wie Candelillawachs, Zuckerrohrwachs und Strohwachse, Bienenwax, Reiswachs, etc.. Chemisch modifizierte Wachse gehen meist durch Veresterung, Umesterung, Amidierung, Hydrierung, etc. aus pflanzenölbasierenden Fettsäuren hervor. Beispielweise fallen hierunter auch Metatheseprodukte von Pflanzenölen.

Zu den biobasierten Wachsen zählen darüber hinaus auch Montanwachse, entweder in unmodifizierter oder raffinierter bzw. derivatisierter Form. Detaillierte Angaben zu derartigen Wachsen finden sich z. B. in Ullmann's Encyclopedia of Industrial Chemistry, 5. Auflage, Vol. A 28, Weinheim 1996, Kapitel 3. (Wachse).

Für die Einarbeitung der Wachse in das Druckfarbensystem kommen unterschiedliche Verfahren in Frage. Beispielsweise kann man das Wachs in einem Lösemittel heiß lösen und erhält durch anschließendes Abkühlen feinteilige flüssige Dispersionen oder Massen von pastenartiger Konsistenz, die mit den Druckfarben abgemischt werden. Möglich ist weiterhin die Vermahlung der Wachse in Gegenwart von Lösemitteln. Nach einer weitverbreiteten Technologie werden die Wachse auch als Feststoffe in Form von feinstverteilten Pulvern ("Mikronisaten") in die Druckfarbenrezeptur eingerührt. Die Feinstpulver werden entweder durch Mahlung, z. B. in Luftstrahlmühlen, oder durch Versprühung hergestellt. Die mittleren Partikelgrößen (d50- bzw. Medianwerte) derartiger Pulver liegen in der Regel im Bereich zwischen 5 und 15 µm. Voraussetzung für die Vermahlbarkeit zu Mikronisat ist eine nicht zu niedrige Härte bzw. Sprödigkeit der Wachsprodukte.

Die Wachse werden, bezogen auf das Druckfarbensystem, in einer Menge von 0,1 bis 12,0 Gew.-%, bevorzugt von 0,1 bis 6,0 Gew.-%, besonders bevorzugt von 0,2 bis 2 Gew.-% eingesetzt.

Das glykosidische Polymer bzw. Polysaccharid kann entweder vor oder nach der Additivierung des Druckfarbensystems mit Wachs eindispergiert werden; auch eine gemeinsame Additivierung durch Einarbeitung eines Gemisches aus mikronisiertem Wachs und Polysaccharid ist möglich. Besonders vorteilhaft haben sich gezeigt, dass glykosidische Polymer und das Wachs gemeinsam zu Mikronisieren und als mikronisierte Mischung einzusetzen. Auch hier kann die mikronisierte Mischung vor oder nach der Additivierung des Druckfarbensystems eindispergiert werden. Die Dispergiermethoden sind dem Fachmann bekannt; in der Regel werden hierzu schnelllaufende Rühr- oder Mischorgane, z. B. Mizer- oder Dissolverscheiben verwendet.

In Kombination mit Polyolefin-, Fischer-Tropsch- und/oder Amidwachsen und/oder biobasiertem Wachs zeigt ein Polysaccharid in der flüssigen Druckfarbe eine verminderte Absetztendenz, der sedimentierte Bodensatz kann leichter redispergiert werden. Ferner zeigen die Druckfarben eine signifikante Scheuerfestigkeit und schaffen damit einen neuen Stand der Technik.

### Beispiele:

### Anwendungstechnische Prüfungen

Als glykosidische Polymere wurden Stärken mit verschiedenen spezifischen Oberflächen (Maisstärke, Hersteller Roquette GmbH) (Tabelle 1) sowie Mikrocellulose (Arbocel MF40/100, Hersteller J. Rettenmaier & Söhne GmbH + Co. KG) geprüft. Durch Sichtung von Maisstärke konnte zudem eine Partikelfraktion mit einer spezifischen Oberfläche nach BET von Oₛₚ = 0,51 m²/g eingesetzt werden.

Als Wachse wurden folgende handelsübliche Produkte aus dem Sortiment der Clariant Produkte (Deutschland) GmbH verwendet:

| | |
|---|---|
| - Ceridust 3610: | Mikronisiertes Polyethylenwachs; d99 = 50 µm. |
| - Ceridust 3620: | Mikronisiertes Polyethylenwachs; d99 = 50 µm. |
| - Ceridust 3910: | Mikronisiertes Amidwachs; d99 = 50 µm. |
| - Ceridust 9615 A: | Mikronisiertes modifiziertes Polyethylenwachs. D99 = 32 µm. |
| - Polyethylenwachs: | Licowax PE 130 für die gemeinsame Mikronisierung mit Maisstärke |

Die Bestimmung der spezifischen Oberfläche erfolgte mittels der BET-Methode nach ISO 9277:2010. Betrachtet wurde dabei im Einklang mit der BET-Theorie das Adsorptionsverhalten von N₂ bei 77,3 K im Relativdruckbereich zwischen 0,05 - 0,3 mit Hilfe eines Sorptomatic 1990 (Porotec). Die Proben wurden im Vorfeld für 5 h bei 80 °C im Hochvakuum getrocknet.

Die Bestimmung der charakteristischen Partikelgrößen D10 und D60 erfolgte nach ISO 13320-1 auf Basis einer Laserbeugungsmessung mit Hilfe eines Mastersizer 2000 (Malvern). Die Proben wurden dazu mit einer Trockendispergiereinheit (Scirocco 2000) vorbehandelt.

**Tabelle 1: Eingesetzte Wachse / glykosidische Polymere**

| | BET-Oberfläche [m²/g] | D60 [µm] | Ungleich förmigkeitszahl [D60/D10] |
|---|---|---|---|
| native Maistärke | 0,10 | 14,9 | 1,8 |
| gesichtete Maisstärke | 0,51 | 7,4 | 2,0 |
| Microcellulose | 0,60 | 7,1 | 3,4 |
| Ceridust 3610 | 0,91 | 6,1 | 2,3 |
| Ceridust 3620 | 0,23 | 9,7 | 2,4 |
| Ceridust 3910 | 0,76 | 8,3 | 2,8 |
| Ceridust 9615 A | 0,88 | 7,1 | 2,3 |
| native Maisstärke / Licowax PE 130 (50:50), gemeinsam mikronisiert | 1,14 | 7,0 | 2,1 |

Zur Bestimmung der Scheuerbeständigkeit wurde der Andruck zunächst gescheuert (Scheuerprüfgerät Prüfbau Quartant, Scheuerbelastung 48 g/qcm, Scheuergeschwindigkeit 15 cm/s). Gemessen wurde die Intensität der auf das Prüfblatt übertragenen Farbe (Farbdifferenz ΔE nach DIN 6174, Messung mit Hunterlab D 25-2, Hunter).

### Prüfung des Absetz- und Redispergierverhaltens

In einem Messzylinder wurden Stärke bzw. mikronisiertes Wachs in einer Gesamtmenge von 2 Gew.-% in 200 g Xylol eindispergiert; die Dispersion wurde stehen gelassen. Die Schichtdicke des nach vorgegebenen Zeiten abgesetzten Bodensatzes wurde abgelesen. Je kleiner der ermittelte Wert ist, desto dichter ist der Bodensatz und desto höher ist die Absetzneigung. Die Redispergierbarkeit wurde durch Kippen des Messzylinders geprüft. Die Resultate sind in nachfolgender Tabelle aufgeführt.

**Tabelle 2: Absetz- sowie Redispergierverhalten**

| Beispiel | | abgelesene Dicke des Bodensatzes [cm] | | | Redispergierbarkeit |
|---|---|---|---|---|---|
| | | nach 1 h | nach 24 h | nach 1 Woche | nach 1 Woche |
| 1 (Vgl.) | native Maisstärke | 0,8 | 1 | 1 | Bodensatz kompakt, mehrmaliges Kippen für Redispergierung erforderlich |
| 2 (Erf.) | native Maisstärke / Licowax PE 130 (50:50), gemeinsam mikronisiert | 2,1 | 1,9 | 1,9 | Bodensatz wolkig bis schwebend; einmaliges Kippen reicht für Redispergierung |

Tabelle 2 zeigt, je höher die Dicke des Bodensatzes, desto besser lassen sich die Partikel redispergieren. Die gemeinsam mikronisierte Stärke / Polyethylenwachsmischung zeigte hierbei eine deutlich verringerte Absetzneigung und die beste Redispergierbarkeit. Die native Maisstärke bildet einen kompakten schwer redispergierbaren Bodensatz

Prüfung in einer Tiefdruckfarbe auf Toluol-Basis:
Eingesetzt wurde eine Illustrationstiefdruckfarbe vom Typ RR Grav Rot toluolbasierend (Siegwerk Druckfarben AG); zu den Probedrucken auf Tiefdruckpapier (Algro Finess 80 g/m²) wurde eine Tiefdruckmaschine LTG 20, Einlehner Prüfmaschinenbau, verwendet. In die Farbe werden 1 Gew.-% Additiv zugegeben
Gemessen wurden Scheuerbeständigkeit, Gleitreibungskoeffizient und Glanz (Tabelle 3).

**Tabelle 3: In den mit "A" gekennzeichneten Zeilen sind die Resultate der mit unmittelbar nach Dispergieren der Farbe erhaltenen Drucke aufgeführt, die Zeilen "B" geben die Resultate wider, die mit einer 3 Tage gelagerten und dann aufgeschüttelten Farbe erhalten wurden.**

| Beispiel | Additiv | | Farbdifferenz ΔE | |
|---|---|---|---|---|
| | | | Halbton | Vollton |
| 3 (Vgl.) | ohne Zusatz | A | 16,5 | 24,0 |
| 4 (Vgl.) | Ceridust 3610 | A | 3,6 | 3,0 |
| 5 (Vgl.) | Ceridust 3910 | A | 19,8 | 38,3 |
| 6 (Vgl.) | (Arbocel MF 40/100) | A | 7,9 | 3,2 |
| 7 (Vgl.) | native Maisstärke ohne | A | 2,1 | 2,3 |
| 8 (Vgl.) | Wachs (Druckfarbe instabil) | B | 3,1 | 2,3 |
| 9 (Erf.) | native Maisstärke / Licowax PE 130 (50:50), gemeinsam mikronisiert | A | 1,4 | 1,6 |
| 10 (Erf.) | | B | 1,2 | 2,0 |
| 11 (Erf.) | gesichtete Maisstärke / Ceridust 3910 7:3 | A | 2,6 | 2,3 |
| 12 (Erf.) | | B | 3,4 | 2,1 |
| 13 (Erf.) | gesichtete Maisstärke / Ceridust 3910 9:1 | A | 2,4 | 2,2 |
| 14 (Erf.) | | B | 3,1 | 2,4 |
| 15 (Erf.) | gesichtete Maisstärke / Ceridust 3610 7:3 | A | 2,3 | 2,2 |
| 16 (Erf.) | | B | 2,3 | 1,8 |
| 17 (Erf.) | gesichtete Maisstärke / Ceridust 3610 9:1 | A | 2,2 | 2,2 |
| 18 (Erf.) | | B | 2,8 | 2,4 |
| 19 (Erf.) | (Arbocel MF 40/100) / Ceridust 3610 | A | 1,3 | 1,0 |
| 20 (Erf.) | | B | 1,3 | 1,0 |

Tabelle 3 zeigt insbesondere für die Beispiele 9 und 10 eine signifikante Verbesserung der Scheuerbeständigkeit für die gemeinsam mikronisierte Stärke/Polyethylenwachs-Mischung (50:50) sowie eine verbesserte Scheuerfestigkeit für erfinderische Beispiele 11 bis 18. Das Druckfarbensystem (Beispeile 7 und 8) mit nativer Maisstärke ist nach 4 h nicht mehr anwendbar. Die Stärke setzt sich vollständig am Boden der Druckfarbe ab.

### Prüfung in einer Offsetfarbe

- Offsetdruckfarbe:: mineralölbasierend von Fa. Epple
- Papier:: Apco II/II 150g/m²

Mit einer Prüfbau-Probedruckmaschine System Dr. Dürner wurden Drucke angefertigt und Scheuereigenschaften geprüft.

**Tabelle. 4:**

| Beispiel | Wachsadditiv | Zusatzmenge [Gew.-%] | Farbdifferenz ΔE | |
|---|---|---|---|---|
| | | | nach 3 h | nach 24 h |
| 21 (Vgl.) | ohne Zusatz | 0 | 32 | 25 |
| 22 (Vgl.) | Ceridust 3610 | 1,5 | 5,8 | 3,5 |
| 23 (Vgl.) | native Maisstärke (Aufbauverhalten beim Drucken) | 1,5 | 3,2 | 2,8 |
| 24 (Vgl.) | | 3,0 | 3,3 | 2,8 |
| 25 (Vgl.) | Arbocel MF 40/100 | 1,5 | 21,3 | 20,7 |
| 26 (Vgl.) | | 3,0 | 21,9 | 21,7 |
| 27 (Vgl.) | native Maisstärke / Ceridust 3610 (7:3) (Aufbauverhalten beim Drucken) | 1,5 | 4,2 | 3,0 |
| 28 (Vgl.) | | 3,0 | 3,8 | 2,8 |
| 29 (Erf.) | gesichtete Maisstärke / Ceridust 3610 (7:3) | 1,5 | 2,3 | 1,2 |
| 30 (Erf.) | | 3,0 | 1,3 | 1,2 |
| 31 (Erf.) | native Maisstärke / Licowax PE 130 (50:50), gemeinsam mikronisiert | 1,5 | 2,3 | 1,3 |
| 32 (Erf.) | | 3,0 | 1,4 | 1,2 |
| 33 (Erf.) | Arbocel MF 40/100/ Ceridust 3610 (1:1) | 1,5 | 3,5 | 3,4 |
| 34 (Erf.) | | 3,0 | 2,6 | 2,4 |

| | | | | |
|---|---|---|---|---|
| n. a.: nicht anwendbar | | | | |

Tabelle 4 zeigt insbesondere für die Beispiele 29 bis 34 eine signifikante Verbesserung der Scheuerbeständigkeit. Auch die Beispiele 27 und 28 zeigen schon eine Verbesserung des Scheuerschutzes. Jedoch neigt für die Beispiele 23 - 28 die Druckfarbe zu einem starken Aufbau auf der Druckerwalze, was die Anwendbarkeit unmöglich macht.

### Prüfung in einer wässrigen Flexodruckfarbe

Zur Herstellung der Farbe wurden Mischungen aus Flexonylblau A B2G (Clariant) und dest. Wasser (5:1; Mischung A) sowie aus Viacryl SC 175 W, 40 WAIP (Cytec Ind.) und dest. Wasser (1:1; Mischung B) hergestellt. Anschließend wurden 70 Teile der Mischung B langsam in 30 Teile der Mischung A eingerührt und das erhaltene Gemisch wurde bei einer Rührgeschwindigkeit von 1200 Upm 30 min homogenisiert. In die Farbe wurden 0,5 bzw 0,8 Gew.-% Stärke bzw. Stärke-Wachs-Mischung eingearbeitet.

Die Flexodruckfarbe wurde mit einem Filmziehgerät (Control Coater) unter Verwendung eines Drahtrakels auf saugfähiges Flexopapier aufgetragen (LWC 60 g/m²; 6 µm Nassfilmstärke).

Nach 24 h Trockenzeit wurde der Scheuerschutz gemessen.

Tabelle 5 zeigt insbesondere für die Beispiele 42 bis 45 eine signifikante Verbesserung der Scheuerbeständigkeit. Auch native Maisstärke zeigt bereits eine Verbesserung der Scheuerbeständigkeit. Das Druckfarbensystem (Beispiele 40 und 41) mit nativer Maisstärke ist nach ca. 4 h nicht mehr anwendbar. Die Stärke setzt sich vollständig am Boden der Druckfarbe ab. (siehe auch Tabelle 2).

**Tabelle 5:**

| Beispiel | Wachsadditiv | Zusatzmenge [Gew.-%] | Farbdifferenz ΔE |
|---|---|---|---|
| 35 (Vgl.) | ohne Zusatz | 0 | 6,4 |
| 36 (Vgl.) | Ceridust 3610 | 0,5 | 3,4 |
| 37 (Vgl.) | | 0,8 | 3,7 |
| 38 (Vgl.) | Ceridust 9615 A | 0,5 | 3,1 |
| 39 (Vgl.) | | 0,8 | 3,1 |
| 40 (Vgl.) | native Maistärke (Druckfarbe instabil) | 0,5 | 2,7 |
| 41 (Vgl.) | | 0,8 | 2,4 |
| 42 (Erf.) | gesichtete Maisstärke / Ceridust 9615 A (7:3) | 0,5 | 1,4 |
| 43 (Erf.) | | 0,8 | 1,4 |
| 44 (Erf.) | native Maisstärke / Licowax PE 130 (50:50), gemeinsam mikronisiert | 0,5 | 0,8 |
| 45 (Erf.) | | 0,8 | 0,7 |

## Patentansprüche

1. Druckfarbensystem, enthaltend nicht modifizierte Polyglykoside und Polyolefin- und/oder Fischer-Tropsch-Wachse und/oder Amidwachse und/oder biobasierte Wachse sowie gegebenenfalls Pigmente, Bindemittel und/oder Lösemittel, wobei die nicht modifizierten Polyglykoside eine spezifische Oberfläche nach BET von minimal 0,45 m²/g und eine Partikelgrößenverteilung mit einer Ungleichförmigkeitszahl (D60/D10) bis maximal 3,5 aufweisen, **dadurch gekennzeichnet, dass** die Polyolefin- oder Fischer-Tropsch- oder Amidwachse oder biobasierten Wachse in mikronisierter Form mit einem d99-Wert von maximal 100 µm, bevorzugt maximal 30 µm, besonders bevorzugt maximal 20 µm eingesetzt werden.

2. Druckfarbensystem gemäß Anspruch 1, **dadurch gekennzeichnet, dass** die nicht modifizierten Polyglykoside in einer Menge, bezogen auf das Druckfarbensystem, von 0,1 bis 12,0 Gew.-%, bevorzugt von 0,1 bis 6,0 Gew.-%, besonders bevorzugt von 0,2 bis 2,0 Gew.-% eingesetzt werden.

3. Druckfarbensystem gemäß den Ansprüchen 1 bis 2, **dadurch gekennzeichnet, dass** die Wachse in einer Menge, bezogen auf das Druckfarbensystem, von 0,1 bis 12,0 Gew.-%, bevorzugt von 0,1 bis 6,0 Gew.-%, besonders bevorzugt von 0,2 bis 2,0 Gew.-% eingesetzt werden.

4. Verwendung eines Druckfarbensystems gemäß einem der vorhergehenden Ansprüche zur Verbesserung des Absetz- und Redispergierverhaltens und der Scheuerfestigkeit von Druckfarbensystemen..

5. Verwendung gemäß Anspruch 4, **dadurch gekennzeichnet, dass** die Komponenten nicht modifiziertes Polyglykosid und Wachs durch Mikronisierung oder Sichten auf eine spezifische Oberfläche gemessen nach BET von mindestens 0,80 m²/g und einer Ungleichförmigkeitszahl von kleiner 3,5 zerkleinert werden.

6. Verwendung gemäß den Ansprüchen 4 bis 5, **dadurch gekennzeichnet, dass** die nicht modifizierten Polyglykoside und das Wachs gemeinsam mikronisiert werden und als mikronisierte Mischung eingesetzt werden.

## Claims

1. A printing ink system comprising unmodified polyglycosides and polyolefin waxes and/or Fischer-Tropsch waxes and/or amide waxes and/or biobased waxes and optionally pigments, binders and/or solvents, whereas the unmodified polyglycosides having a BET specific surface area of at least 0,45 m²/g and a particle size distribution with a non-uniformity number (D60/D10) of up to a maximum of 3.5, **characterized in that** the polyolefin or Fischer-Tropsch or amide waxes or biobased waxes are used in micronized form with a d99 value of at most 100 µm, preferably at most 30 µm, particularly preferably at most 20 µm.

2. The printing ink system according to claim 1, **characterized in that** the unmodified polyglycosides are used in an amount, based on the printing ink system, of from 0.1 to 12.0% by weight, preferably from 0.1 to 6.0% by weight, particularly preferably from 0.2 to 2.0% by weight.

3. A printing ink system according to claims 1 to 2, **characterized in that** the waxes are used in an amount, based on the printing ink system, of 0.1 to 12.0% by weight, -preferably of 0.1 to 6.0% by weight, particularly preferably of 0.2 to 2.0% by weight.

4. Use of an ink system according to any one of the preceding claims for improving the set-off and redispersion behaviour and the rub resistance of printing ink systems.

5. Use according to claim 4, **characterized in that** the components unmodified polyglycoside and wax are comminuted by micronization or sifting to a specific surface area measured according to BET of at least 0.80 m²/g and a non-uniformity number of less than 3.5.

6. Use according to claims 4 to 5, **characterized in that** the unmodified polyglycosides and the wax are micronized together and used as a micronized mixture.

## Revendications

1. Système d'encres d'impression contenant des polyglycosides non modifiés et des cires polyoléfiniques et/ou des cires Fischer-Tropsch et/ou des cires amides et/ou des cires biosourcées ainsi que, le cas échéant, des pigments, des liants et/ou des solvants, les polyglycosides non modifiés présentant une surface spécifique selon BET d'au moins 0,45 m²/g et une répartition de la taille des particules avec un nombre de non-uniformité (D60/D10) allant jusqu'à 3,5 au maximum, **caractérisé en ce que** les cires de polyoléfine ou de Fischer-Tropsch ou d'amide ou les cires biobasées sont utilisées sous forme micronisée avec une valeur d99 de 100 µm au maximum, de préférence de 30 µm au maximum, de manière particulièrement préférée de 20 µm au maximum.

2. Système d'encres d'impression selon la revendication 1, **caractérisé en ce que** les polyglycosides non modifiés sont utilisés en une quantité, par rapport au système d'encres d'impression, de 0,1 à 12,0 % en poids, de préférence de 0,1 à 6,0 % en poids, de manière particulièrement préférée de 0,2 à 2,0 % en poids.

3. Système d'encres d'impression selon les revendications 1 à 2, **caractérisé en ce que** les cires sont utilisées en une quantité, par rapport au système d'encres d'impression, de 0,1 à 12,0 % -en poids, de préférence de 0,1 à 6,0 % en poids, de manière particulièrement préférée de 0,2 à 2,0 % en poids.

4. Utilisation d'un système d'encres d'impression selon l'une des revendications précédentes pour améliorer le comportement de décantation et de redispersion et la résistance au frottement des systèmes d'encres d'impression.

5. Utilisation selon la revendication 4, **caractérisée en ce que** les composants polyglycoside non modifié et cire sont broyés par micronisation ou criblage pour obtenir une surface spécifique mesurée selon BET d'au moins 0,80 m²/g et un indice de non-uniformité inférieur à 3,5.

6. Utilisation selon les revendications 4 à 5, **caractérisée en ce que** les polyglycosides non modifies et la cire sont micronisés ensemble et sont utilisés sous forme de mélange micronisé.
